# FASCICULE DE BREVET EUROPEEN

(11) **EP 3 302 897 B1**
(45) Date de publication et mention de la délivrance du brevet: **13.11.2019**
(21) Numéro de dépôt: 16729043.6
(22) Date de dépôt: 13.05.2016
(51) Int. Cl.: B25J 9/16

(54) **SYSTÈME ET PROCÉDÉ DE TEST D'UN ORGANE MACHINE OU ROBOT**
SYSTEM UND VERFAHREN ZUM TESTEN EINES ROBOTER- ODER MASCHINENELEMENTS
SYSTEM AND METHOD FOR TESTING A ROBOT OR MACHINE MEMBER

(30) Priorité: 31.05.2015 FR 1501121
(43) Date de publication de la demande: 11.04.2018
(73) Titulaire: 4D-Virtualiz, 63100 Clermont-Ferrand (FR)
(72) Inventeur: DELMAS, Pierre, 63170 Aubière (FR); MALARTRE, Florent, 63000 Clermont-Ferrand (FR)
(74) Mandataire: Gabriel, Franck
(86) Numéro de dépôt international: PCT/IB2016/000648
(87) Numéro de publication internationale: WO 2016/193799

(56) Documents cités:
- FR-A1- 2 992 443

## Description

### DOMAINE TECHNIQUE DE L'INVENTION

La présente invention concerne un système de test d'un organe machine ou robot comprenant une pluralité de capteurs et au moins un actionneur. Elle concerne également un procédé de test correspondant.

### ETAT DE LA TECHNIQUE ANTERIEURE

Depuis quelques décennies, on assiste à une très forte accélération du nombre de technologies mises à disposition des utilisateurs, dans une quasi)infinité de domaines. Pour faire face à ce nouvel environnement, les entreprises sont souvent contraintes à réduire les temps de développement des nouveaux produits. Ceux-ci étant par ailleurs souvent de plus en plus complexes, il devient par ailleurs de plus en plus contraignant et coûteux de tester les multiples facettes des machines et robots de toutes sortes en cours de développement. Pour répondre à ces demandes, des outils de simulation ou de test ont été développés et mis à disposition des chercheurs, scientifiques et ingénieurs susceptibles de concevoir les machines de demain.

Par exemple, la demande de brevet FR3 008 531 propose un simulateur pour une machine de travail, par exemple une grue, une machine de construction ou un chariot de manutention. Le simulateur comprend un poste de commande de la machine et un module de simulation graphique pour le calcul de l'environnement virtuel de la machine et de la physique de la machine, et avec au moins un moyen d'affichage pour la représentation visuelle de l'environnement calculé de la machine. Un module de simulation technique est prévu par lequel l'état et/ou le comportement dynamique d'un ou de plusieurs composants de commande et/ou d'entraînement de la machine de travail simulée peuvent être déterminés et visualisés. L'invention est applicable en particulier dans le domaine des travaux publics.

La demande FR 2 985 055 décrit un procédé pour estimer le comportement d'une ou plusieurs configurations d'un composant, le procédé d'évaluation comprend des étapes consistant à : obtenir un modèle générique du composant comportant des paramètres, des règles de contrôle de valeurs des paramètres et une spécification de simulation d'au moins un comportement du composant en fonction des paramètres ; établir une ligne de valeurs des paramètres pour chaque configuration à évaluer ; soumettre le modèle générique obtenu et la ou les lignes de valeurs établies à une machine comprenant : une séquence d'instructions informatiques de génération automatique d'au moins un modèle individuel associé à une configuration du composant en affectant aux paramètres du modèle générique des valeurs de configuration contrôlées par les dites règles à partir d'au moins une ligne de valeurs d'entrée ; une séquence d'instructions informatiques de lancement d'une simulation numérique d'un comportement sélectionné du modèle individuel au moyen de ladite spécification.

On connaît également la demande de brevet FR 2 992 443 propose une plateforme de simulation comportant un moyen de calcul propre à exécuter les instructions d'un programme de simulation comportant un module de configuration d'un environnement en trois dimensions, un module de simulation d'une réponse d'un capteur du robot, et un module de simulation d'une dynamique du robot. Selon un aspect de l'invention, le programme de simulation comporte, en outre, un module d'ordonnancement temporel comportant une horloge logique délivrant l'instant logique courant, un schéma d'ordonnancement, associant à chaque instant logique un ensemble d'actions à réaliser, un sous-module d'appel d'une action de simulation propre à lancer la réalisation d'une action de simulation et un sous-module d'appel d'une action de réaction du robot, propre à lancer la réalisation d'une action de réponse du robot.

La plateforme et le procédé décrits prévoient une horloge logique et un module d'ordonnancement temporel. Ces éléments sont déterminants pour l'architecture organisationnelle et opérationnelle de la plateforme et du procédé, qui intègrent une suite d'actions prédéterminées, agencées successivement selon un ordre temporel prédéterminé. La surveillance des événements est basée sur le temps écoulé, et la programmation des événements à venir est une fonction directe du temps. Ce système permet donc de vérifier si des événements prévus à un instant donné se produisent ou pas. Il permet aussi de suggérer un nouvel événement lorsqu'un compteur atteint un seuil prédéterminé.

Le système et le procédé présentés ne permettent pas de simuler des systèmes complexes, ni des systèmes dans lesquels plusieurs événements peuvent survenir, à des instants inconnus, et /ou avec des conséquences opérationnelles potentielles multiples.

Pour pallier ces différents inconvénients, l'invention prévoit différents moyens techniques.

### EXPOSE DE L'INVENTION

Tout d'abord, un premier objet de l'invention consiste à prévoir un système et un procédé permettant de simuler la mise en œuvre et le fonctionnement d'une machine avec ses paramètres sensoriels et actionneurs dans un environnement virtuel correspondant à l'environnement réel dans lequel la machine réelle devrait fonctionner.

Un autre objet de l'invention consiste à prévoir un système et procédé de simulation du fonctionnement d'une machine, adapté pour des machines et procédés complexes.

Encore un autre objet de l'invention consiste à prévoir un système et procédé de simulation du fonctionnement d'une machine, adapté pour mise en œuvre où les scénarios de réalisation sont multiples.

Encore un autre objet de l'invention consiste à prévoir un système et procédé de simulation du fonctionnement d'une machine, adapté pour mise en œuvre où les scénarios de réalisation ne dépendant pas directement du temps écoulé.

Pour ce faire, l'invention prévoit un système de test d'un organe machine ou robot comprenant une pluralité de capteurs et au moins un actionneur, ledit système comprenant :
- un module de génération d'environnement machine, conçu pour mettre en œuvre à partir de données d'environnement un espace virtuel représentatif d'un environnement réel de l'organe machine à tester ;
- un module de simulation de travail machine, conçu pour mettre en œuvre à partir de données d'architecture machine et de fonctionnement de machine une machine virtuelle représentative d'une machine réelle à tester;
- un module de simulation d'actionneurs, conçu pour mettre en œuvre à partir de données d'actionneurs au moins un actionneur virtuel représentatif d'un actionneur réel de l'organe machine à tester ;
- un module de détermination d'état actuel du système, conçu pour recevoir les données d'une pluralité de capteurs surveillant les données physiques de l'organe machine et de l'espace virtuel dans lequel l'organe machine évolue et déterminer un état du système global à partir de données d'état de système ;
- un module de réaction d'organe machine, conçu pour identifier dans une base de données d'actions potentielles, au moins une réaction d'organe machine correspondant à l'état du système préalablement déterminé et générer la réaction correspondante dans l'espace virtuel.

Une telle architecture permet de procéder à des simulations de fonctionnement pour un vaste éventail de machines, dans une multitude de configurations. En outre, la simulation permet de prendre en compte des scénarios non préétablis, et/ou dont la durée et/ou la répartition des phases dans le temps n'est pas connue ni préétablie.

De manière avantageuse, le système comprend également un microprocesseur et des données instructions de commande et de mise en œuvre.

De manière avantageuse, le module de détermination d'état actuel utilise des paramètres physiques, indépendamment du temps (en tant que tel).

Le système n'utilise pas de compteur ni pas d'instant logique, mais simplement des étapes séquentielles susceptibles de se produire les unes à la suite des autres.

L'invention prévoit également un procédé de test d'un organe machine ou robot comprenant une pluralité de capteurs et au moins un actionneur, comprenant les étapes selon lesquelles :
- un module de génération d'environnement machine génère à partir de données d'environnement un espace virtuel représentatif d'un environnement réel de l'organe machine à tester ;
- un module de simulation de machine génère à partir de données d'architecture machine et de fonctionnement de machine une machine virtuelle représentative d'une machine réelle à tester ;
- un module de simulation d'actionneurs génère à partir de données d'actionneurs au moins un actionneur virtuel représentatif d'un actionneur réel de l'organe machine à tester ;
- un module de détermination d'état actuel reçoit les données d'une pluralité de capteurs surveillant les données physiques de l'organe machine et de l'espace virtuel dans lequel l'organe machine évolue, et détermine un état du système global à partir de données d'état de système;
- un module de réaction d'organe machine identifie, dans une base de données d'actions potentielles, au moins une réaction d'organe machine correspondant à l'état du système préalablement déterminé et génère la réaction correspondante dans l'espace virtuel.

Selon un mode de réalisation avantageux, le procédé comprend, après l'étape de génération de la réaction de l'organe machine, une étape de retour vers l'étape de réception de données d'une pluralité de capteurs surveillant les données physiques de l'organe machine et de l'espace virtuel dans lequel l'organe machine évolue.

On peut ainsi prendre en compte des processus comprenant une pluralité de cycles.

Selon un autre mode de réalisation avantageux, le procédé comprend, après l'étape de génération de la réaction de l'organe machine, une étape d'arrêt du système.

De manière avantageuse, l'étape de détermination d'état actuel du système est réalisée à partir de paramètres physiques indépendamment du temps.

### DESCRIPTION DES FIGURES

Tous les détails de réalisation sont donnés dans la description qui suit, complétée par les figures 1 à 3, présentées uniquement à des fins d'exemples non limitatifs, et dans lesquelles:
- la figure 1 est une représentation schématique d'un système de test d'un organe machine ou robot selon l'invention ;
- la figure 2 est un organigramme fonctionnel illustrant les principales étapes d'un procédé de test d'un organe machine ou robot selon l'invention ;
- la figure 3 est représentation schématique d'un univers virtuel de test mis en relation avec une pluralité d'états potentiels et avec les réactions d'organe machine ;
- la figure 4 est une représentation schématique d'un exemple de mise en œuvre pour un robot industriel d'assemblage.

### DESCRIPTION DETAILLEE DE L'INVENTION

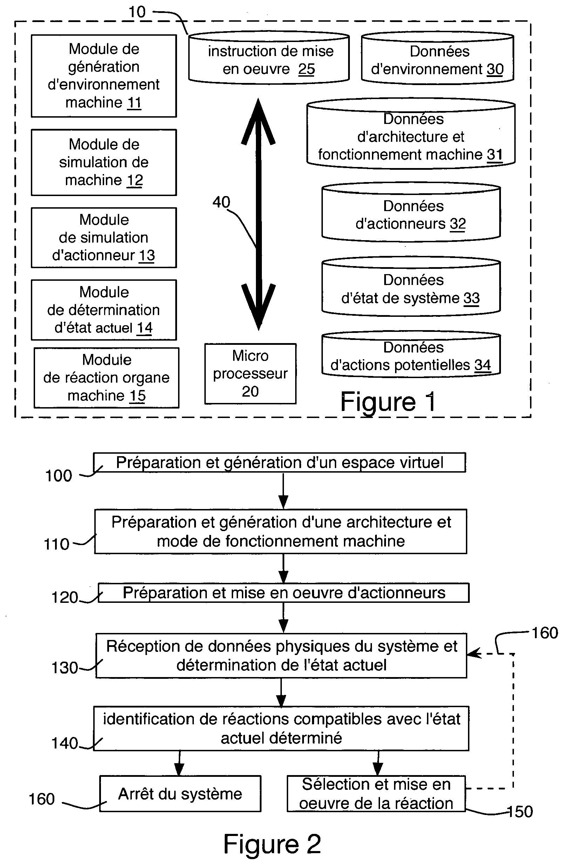

La figure 1 illustre de façon schématique un exemple de réalisation d'un système de test d'un organe machine ou robot selon l'invention. De manière générale, un tel système comprend une pluralité de capteurs prévus pour acquérir les données des multiples paramètres physiques permettant de qualifier l'état du processus. Les capteurs peuvent être en coopération avec la machine virtuelle ou encore dans l'environnement de la machine.

Le système prévoit également la mise en œuvre d'au moins un actionneur dépendant ou coopérant ou dépendant de la machine. Les actionneurs sont avantageusement associés à des capteurs afin de suivre leur évolution.

Un module de génération d'environnement machine 11 est prévu pour préparer et mettre en œuvre un espace virtuel représentatif d'un environnement réel de l'organe machine à tester. Cet espace virtuel est généré à partir de données 30 d'environnement.

Le système comporte également un module de simulation de travail 12, conçu pour mettre en œuvre une machine virtuelle représentative de la machine réelle que l'on souhaite pouvoir tester. Cette mise en œuvre est effectuée à partir de données 31 d'architecture machine et de fonctionnement de machine.

La machine objet de la simulation comporte un ou plusieurs actionneurs qu'il convient également de simuler. Des données 13 d'actionneurs permettent de mettre en œuvre au moins un actionneur virtuel de la machine, et/ou en relation avec la machine.

Le système comprend également un module 14 de détermination d'état actuel du système. Ce module analyse le comportement et les actions de la machine ainsi que l'environnement de la machine afin d'en extraire des données d'état. Les données d'état sont avantageusement en temps réel, ou actuel, afin de permettre une simulation précise et réaliste comprenant toutes les phases du processus opérationnel.

Pour ce faire, le module 14 de détermination d'état reçoit les données d'une pluralité de capteurs surveillant les données physiques de l'organe machine et de l'espace virtuel dans lequel l'organe machine évolue. L'analyse de ces données, en relation avec des données préalablement établies 33 d'état de système, permet de fournir des données d'état, soit sous format global, soit pour plusieurs composantes de l'ensemble analysé.

Le système selon l'invention prévoit également un module 15 de réaction d'organe machine. Ce module est conçu pour, dans un premier temps, identifier, à partir d'une base de données 34 d'actions potentielles, au moins une réaction d'organe machine correspondant à l'état du système préalablement déterminé. Le module est aussi conçu pour, dans un second temps, générer la réaction correspondante dans l'espace virtuel. Par exemple, une réaction peut consister à déplacer un actionneur, modifier un paramètre opérationnel tel qu'une température ou une vitesse. Une réaction peut aussi comporter plusieurs composantes.

Un bus 40, un microprocesseur 20 et un module 25 de données d'instructions de commande ou de mise en œuvre complètent le système.

La figure 2 est un organigramme fonctionnel des principales étapes du procédé de test selon l'invention. Sept étapes sont ainsi illustrées, ce nombre pouvant varier selon les mises en oeuvre, soit en combinant certaines étapes, soit en ajoutant une ou plusieurs étapes intermédiaires.

A l'étape 100, le module de génération d'environnement machine un espace virtuel. Cet espace vise à simuler l'environnement réel de l'organe machine à tester. A cet effet, le module de génération permet de prendre en compte un vaste éventail de paramètres physiques, tels que la température, pression, vitesse, humidité, luminosité, etc.

L'étape 110 prévoit la mise en œuvre une machine virtuelle représentative de la machine réelle à tester. Comme pour l'étape précédente, afin d'être le plus fidèle possible à la réalité, le module 12 de simulation de machine offre une vaste palette de fonctions, d'architectures, combinables de multiples façons afin de permettre de simuler pratiquement tout type de machine ou robot.

L'étape 120 concerne la mise en œuvre d'au moins un actionneur virtuel représentatif d'un actionneur réel de l'organe machine à tester. Des données d'actionneurs 32 sont à disposition de l'utilisateur à cet effet.

A l'étape 130, le module de détermination d'état actuel 14 reçoit les données des capteurs surveillant l'organe machine et l'espace virtuel dans lequel l'organe machine évolue (130). Ces données sont utiles pour l'étape suivante, 140, dans laquelle le module de détermination d'état actuel 14 détermine un état du système à partir de données 33 reçues à l'étape 130.

Enfin, à l'étape 150, le module de réaction d'organe machine 15 identifie au moins une réaction d'organe machine correspondant à l'état du système déterminé à l'étape 140. Ensuite, le même module détermine et génère la réaction correspondante dans l'espace virtuel. Une base de données 34 d'actions potentielles facilite grandement la mise en œuvre de cette étape.

En variante, l'étape 160 prévoit un retour vers l'étape 130, afin de permettre une prise en compte aisée et efficace des procédés comportant plusieurs phases.

L'étape 170 consiste à stopper la mise en œuvre du procédé. Cette étape peut être soit déclenchée automatiquement si certains critères préalablement établis sont détectés, soit manuellement, par l'utilisateur, qui souhaite par exemple s'attarder d'avantage sur une certaine phase du procédé en cours d'investigation.

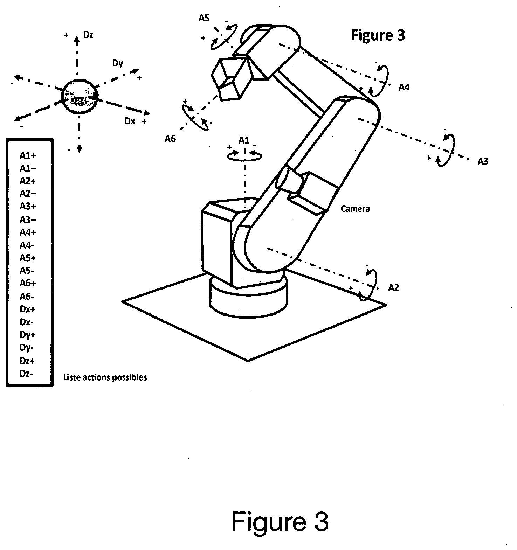

**La** figure 3 illustre un exemple d'une scène de simulation dans lequel un objet à tester, dans cet exemple un robot d'assemblage à six axes, est représenté. Les six axes (A1, A2, A3, A4, A5, A6) du robot sont illustrés sur la figure. La scène prévoit par ailleurs une sphère, présente dans l'espace au voisinage immédiat du robot d'assemblage. La sphère est mobile dans l'espace représenté par les axes x, y et z. En relation avec la figure 3, la liste des actions potentielles en relation avec les six axes du robot et les trois directions x, y et z (pour la sphère) sont représentées. Dx, Dy et Dz correspondent aux déplacements possibles de la sphère selon les axes x, y et z.

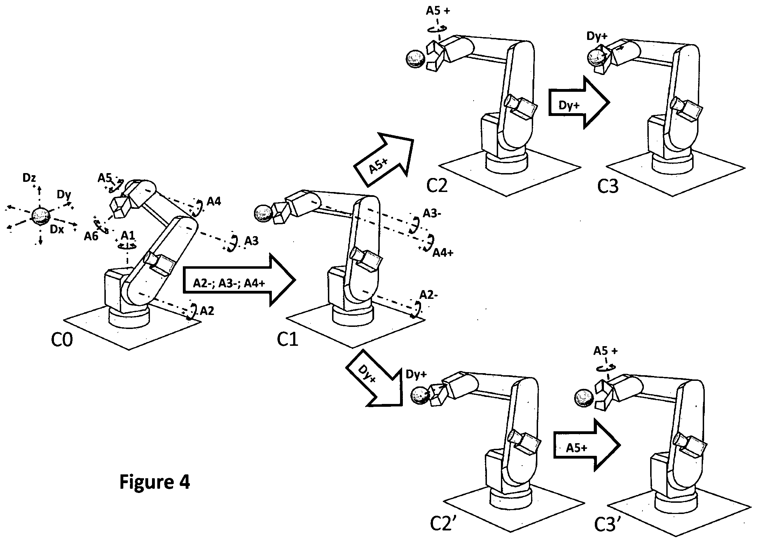

La figure 4 illustre un exemple montrant différentes possibilités de configurations du système précédemment décrit en relation avec la figure 3, en fonction de l'enchainement des ordres de commande. De C0 à C1, le robot exécute des mouvements selon les axes A2-, A3-, et A4+. La pince est alors à proximité immédiate de la sphère. En C2, la pince se positionne avec un déplacement en A5+, pour une prise de la sphère en C3 après un déplacement Dy+ de la sphère.

C2' et C3' présentent un scénario alternatif où les mouvements sont inversés. Ainsi, en C2', la sphère se déplace selon Dy+ et en C3', la pince effectue un déplacement selon A5+. Selon ce scénario, la pince ne parvient pas à capter la sphère. Une caméra (optionnelle), permet à un observateur de suivre l'évolution de la scène selon un point d'observation prédéfini.

Les Figures et leurs descriptions faites ci-dessus illustrent l'invention plutôt qu'elles ne la limitent. En particulier, l'invention et ses différentes variantes viennent d'être décrites en relation avec un exemple particulier comportant une machine unique dans un environnement directement adapté à cette machine. Néanmoins, il est évident pour un homme du métier que l'invention peut être étendue à d'autres modes de réalisation dans lesquels en variantes, on prévoit une pluralité de machines ou robots, fixes ou mobiles, similaires ou complémentaires avec ou sans interactions entre elles (comme par exemple une chaîne de montage) et dans un environnement global plus vaste que celui immédiatement dépendant d'une des machines, l'étendue de la protection étant définie par les revendications.

**Numéros de référence employés sur les figures**

| | |
|---|---|
| 10 | Système de simulation |
| 11 | Module de génération d'environnement machine |
| 12 | Module de simulation machine |
| 13 | Module de simulation d'actionneur |
| 14 | Module de détermination d'état actuel |
| 15 | Module de réaction d'organe machine |
| 20 | Microprocesseur |
| 25 | Données d'instruction de mise en œuvre |
| 30 | Données d'environnement |
| 31 | Données d'architecture et fonctionnement machine |
| 32 | Données d'actionneurs |
| 33 | Données d'état de système |
| 34 | Données d'actions potentielles |
| 40 | Bus |
| | |
| 100 | Préparation et génération d'un espace virtuel |
| 110 | Préparation et génération architecture et mode de fonctionnement machine |
| 120 | Préparation et mise en œuvre d'actionneurs |
| 130 | Réception de données physiques du système et détermination de l'état actuel |
| 140 | Identification de réactions compatibles avec l'état actuel déterminé |
| 150 | Sélection et mise en œuvre de la réaction |
| 160 | Boucle de retour vers l'étape 130 |
| 170 | Arrêt du système |

## Revendications

1. Système de test d'un organe machine ou robot comprenant une pluralité de capteurs et au moins un actionneur, ledit système comprenant :
- un module de génération d'environnement machine (11), conçu pour mettre en oeuvre à partir de données (30) d'environnement un espace virtuel représentatif d'un environnement réel de l'organe machine ou robot à tester ;
- un module de simulation de travail machine (12), conçu pour mettre en œuvre à partir de données (31) d'architecture machine et de fonctionnement de machine une machine virtuelle représentative d'une machine réelle à tester;
- un module de simulation d'actionneurs (13), conçu pour mettre en oeuvre à partir de données (32) d'actionneurs au moins un actionneur virtuel représentatif d'un actionneur réel de l'organe machine ou robot à tester (120) ;
- un module de détermination d'état actuel du système (14), conçu pour recevoir les données d'une pluralité de capteurs surveillant les données physiques de l'organe machine ou robot et de l'espace virtuel dans lequel l'organe machine ou robot évolue et déterminer un état du système global à partir de données (33) d'état de système ;
- un module de réaction d'organe machine ou robot (15), conçu pour identifier dans une base de données (34) d'actions potentielles, au moins une réaction d'organe machine ou robot correspondant à l'état du système préalablement déterminé et générer la réaction correspondante dans l'espace virtuel.

2. Système de test d'un organe machine ou robot selon la revendication 1, comprenant également un microprocesseur (20) et des données (25) instructions de commande et de mise en œuvre.

3. Procédé de test d'un organe machine ou robot comprenant une pluralité de capteurs et au moins un actionneur, comprenant les étapes selon lesquelles :
- un module de génération d'environnement machine (11) génère à partir de données (30) d'environnement un espace virtuel représentatif d'un environnement réel de l'organe machine ou robot à tester (100);
- un module de simulation de machine (12) génère à partir de données (31) d'architecture machine et de fonctionnement de machine une machine virtuelle représentative d'une machine réelle à tester (110);
- un module de simulation d'actionneurs (13) génère (110) à partir de données (32) d'actionneurs au moins un actionneur virtuel représentatif d'un actionneur réel de l'organe machine ou robot à tester (120) ;
- un module de détermination d'état actuel (14) reçoit les données d'une pluralité de capteurs surveillant les données physiques de l'organe machine ou robot
et de l'espace virtuel dans lequel l'organe machine ou robot évolue (130), et détermine un état du système global à partir de données (33) d'état de système (140);
- un module de réaction d'organe machine ou robot (15) identifie, dans une base de données (34) d'actions potentielles, au moins une réaction d'organe machine ou robot correspondant à l'état du système préalablement déterminé et génère la réaction correspondante dans l'espace virtuel (150).

4. Procédé de test d'un organe machine ou robot selon la revendication 3, comprenant, après l'étape (150) de génération de la réaction de l'organe machine ou robot une étape (160) de retour vers l'étape (130) de réception de données d'une pluralité de capteurs surveillant les données physiques de l'organe machine ou robot et de l'espace virtuel dans lequel l'organe machine ou robot évolue (130).

5. Procédé de test d'un organe machine ou robot selon l'une des revendications 3 ou 4, comprenant, après l'étape (150) de génération de la réaction de l'organe machine ou robot une étape (170) d'arrêt du système.

6. Procédé de test d'un organe machine ou robot selon l'une des revendications 3 à 5, dans lequel l'étape de détermination d'état actuel du système est réalisée à partir de paramètres physiques indépendamment du temps.

## Patentansprüche

1. System zum Testen eines Maschinen- oder Roboterelements, das eine Vielzahl von Sensoren und mindestens einen Aktor umfasst, wobei das System umfasst:
- ein Modul zum Erzeugen einer Maschinenumgebung (11), das dazu konzipiert ist, anhand von Umgebungsdaten (30) einen virtuellen Raum zu implementieren, der für eine reale Umgebung des zu testenden Maschinen- oder Roboterelements repräsentativ ist;
- ein Modul zum Simulieren von Maschinenarbeit (12), das dazu konzipiert ist, anhand von Maschinenarchitekturdaten (31) und Maschinenbetriebsdaten eine virtuelle Maschine zu implementieren, die für eine zu testende reale Maschine repräsentativ ist;
- ein Modul zum Simulieren von Aktoren (13), das dazu konzipiert ist, anhand von Aktordaten (32) mindestens einen virtuellen Aktor zu implementieren, der für einen realen Aktor des zu testenden Maschinen- oder Roboterelements (120) repräsentativ ist;
- ein Modul zum Bestimmen des aktuellen Zustands des Systems (14), das dazu konzipiert ist, die Daten einer Vielzahl von Sensoren, welche die physischen Daten des Maschinen- oder Roboterelements und des virtuellen Raums, in dem sich das Maschinen- oder Roboterelement bewegt, überwachen, zu empfangen und anhand von Systemzustandsdaten (33) einen Zustand des Gesamtsystems zu bestimmen;
- ein Modul zur Reaktion eines Maschinen- oder Roboterelements (15), das dazu konzipiert ist, in einer Datenbank (34) potenzieller Aktionen mindestens eine Maschinen- oder Roboterelementreaktion zu ermitteln, die dem zuvor bestimmten Zustand des Systems entspricht, und die entsprechende Reaktion im virtuellen Raum zu erzeugen.

2. System zum Testen eines Maschinen- oder Roboterelements nach Anspruch 1, umfassend auch einen Mikroprozessor (20) und Befehlsdaten (25) zur Steuerung und Implementierung.

3. Verfahren zum Testen eines Maschinen- oder Roboterelements, das eine Vielzahl von Sensoren und mindestens einen Aktor umfasst, umfassend die Schritte, gemäß denen:
- ein Modul zum Erzeugen einer Maschinenumgebung (11) anhand von Umgebungsdaten (30) einen virtuellen Raum erzeugt, der für eine reale Umgebung des zu testenden Maschinen- oder Roboterelements repräsentativ ist (100) ;
- ein Modul zum Simulieren der Maschine (12) anhand von Maschinenarchitekturdaten (31) und Maschinenbetriebsdaten eine virtuelle Maschine erzeugt, die für eine zu testende reale Maschine repräsentativ ist (110);
- ein Modul zum Simulieren von Aktoren (13) anhand von Aktordaten (32) mindestens einen virtuellen Aktor erzeugt (110), der für einen realen Aktor des zu testenden Maschinen- oder Roboterelements repräsentativ ist (120);
- ein Modul zum Bestimmen des aktuellen Zustands (14) die Daten einer Vielzahl von Sensoren, welche die physischen Daten des Maschinen- oder Roboterelements und des virtuellen Raums, in dem sich das Maschinen- oder Roboterelement bewegt, überwachen, empfängt (130) und anhand von Systemzustandsdaten (33) einen Zustand des Gesamtsystems bestimmt (140);
- ein Modul zur Reaktion eines Maschinen- oder Roboterelements (15) in einer Datenbank (34) potenzieller Aktionen mindestens eine Maschinen- oder Roboterelementreaktion ermittelt, die dem zuvor bestimmten Zustand des Systems entspricht, und die entsprechende Reaktion im virtuellen Raum erzeugt (150) .

4. Verfahren zum Testen eines Maschinen- oder Roboterelements nach Anspruch 3, umfassend nach dem Schritt (150) des Erzeugens der Reaktion des Maschinen-oder Roboterelements einen Schritt (160) des Zurückkehrens zum Schritt (130) des Empfangens von Daten einer Vielzahl von Sensoren, welche die physischen Daten des Maschinen- oder Roboterelements und des virtuellen Raums, in dem sich das Maschinen-oder Roboterelement bewegt (130), überwachen.

5. Verfahren zum Testen eines Maschinen- oder Roboterelements nach einem der Ansprüche 3 oder 4, umfassend nach dem Schritt (150) des Erzeugens der Reaktion des Maschinen- oder Roboterelements einen Schritt (170) des Anhaltens des Systems.

6. Verfahren zum Testen eines Maschinen- oder Roboterelements nach einem der Ansprüche 3 bis 5, wobei der Schritt des Bestimmens des aktuellen Zustands des Systems anhand von physischen Parametern unabhängig von der Zeit ausgeführt wird.

## Claims

1. System for testing a machine or robot member comprising a plurality of sensors and at least one actuator, said system comprising:
- a machine environment generation module (11), designed to implement, from environment data (30), a virtual space representative of a real environment of the machine or robot member to be tested;
- a machine work simulation module (12), designed to implement, from machine architecture and machine operation data (31), a virtual machine representative of a real machine to be tested;
- an actuator simulation module (13), designed to implement, from actuator data (32), at least one virtual actuator representative of a real actuator of the machine or robot member to be tested (120);
- a current system status determination module (14), designed to receive the data from a plurality of sensors monitoring the physical data of the machine or robot member and from the virtual space in which the machine or robot member moves around and determine an overall system status from system status data (33);
- a machine or robot member reaction module (15), designed to identify, in a database (34) of potential actions, at least one machine or robot member reaction corresponding to the status of the system previously determined and generate the corresponding reaction in the virtual space.

2. System for testing a machine or robot member according to Claim 1, also comprising a microprocessor (20) and control and implementation instruction data (25).

3. Method for testing a machine or robot member comprising a plurality of sensors and at least one actuator, comprising the following steps:
- a machine environment generation module (11) generates, from environment data (30), a virtual space representative of a real environment of the machine or robot member to be tested (100);
- a machine simulation module (12) generates, from machine architecture and machine operation data (31), a virtual machine representative of a real machine to be tested (110);
- an actuator simulation module (13) generates (110), from actuator data (32), at least one virtual actuator representative of a real actuator of the machine or robot member to be tested (120);
- a current status determination module (14) receives the data from a plurality of sensors monitoring the physical data from the machine or robot member and from the virtual space in which the machine or robot member moves around (130), and determines an overall status of the system from system status data (33) (140);
- a machine or robot member reaction module (15) identifies, in a database (34) of potential actions, at least one machine or robot member reaction corresponding to the status of the system previously determined and generates the corresponding reaction in the virtual space (150) .

4. Method for testing a machine or robot member according to Claim 3, comprising, after the step (150) of generation of the reaction of the machine or robot member, a step (160) of return to the step (130) of data from a plurality of sensors monitoring the physical data of the machine or robot member and from the virtual space in which the machine or robot member moves around (130).

5. Method for testing a machine or robot member according to one of Claims 3 and 4, comprising, after the step (150) of generation of the reaction of the machine or robot member, a step (170) of stopping the system.

6. Method for testing a machine or robot member according to one of Claims 3 to 5, in which the step of determination of the current system status is performed from physical data independently of time.
